# EUROPÄISCHE PATENTSCHRIFT

(11) **EP 2 049 349 B1**
(45) Veröffentlichungstag und Bekanntmachung des Hinweises auf die Patenterteilung: **10.08.2011**
(21) Anmeldenummer: 07729701.8
(22) Anmeldetag: 31.05.2007
(51) Int. Cl.: B60G 17/015

(54) **PNEUMATISCHE NIVEAUREGELANLAGE**
PNEUMATIC LEVEL CONTROL SYSTEM
INSTALLATION DE RÉGULATION DE NIVEAU PNEUMATIQUE

(30) Priorität: 04.08.2006 DE 102006036911
(43) Veröffentlichungstag der Anmeldung: 22.04.2009
(73) Patentinhaber: Continental Teves AG & Co. OHG, 60488 Frankfurt (DE)
(72) Erfinder: SACK, Maik, 31582 Nienburg/Weser (DE)
(86) Internationale Anmeldenummer: PCT/EP2007/055289
(87) Internationale Veröffentlichungsnummer: WO 2008/015037

(56) Entgegenhaltungen:
- EP-A- 1 342 596
- EP-A2- 1 243 447
- EP-B1- 1 274 596
- WO-A-2005/105492
- WO-A-2005/113272
- DE-C1- 19 959 556
- US-A- 5 159 554

## Beschreibung

Die Erfindung betrifft ein Verfahren zur Steuerung und/oder Regelung einer pneumatischen Niveauregelanlage eines Kraftfahrzeuges, enthaltend eine Luftversorgung, mindestens einen Drucksensor, mindestens ein Steuerventil, mindestens ein Sperrventil und mindestens eine Luftfeder, wobei die Luftfeder über eine Druckleitung mit der Luftversorgung in Verbindung steht und der Druck in der Druckleitung von dem Drucksensor ermittelt werden kann, ein Steuergerät zur Ansteuerung des Steuerventils und des Sperrventils und zur Verarbeitung eines Initialisierungssignals und des Signals des Drucksensors, sowie eine pneumatische Niveauregelanlage zur Durchführung des Verfahrens.

Üblicherweise erfolgt die Druckmessung in pneumatischen Niveauregelanlagen mittels Drucksensoren. Für Drucksensoren sind verschiedene Sensorprinzipien bekannt, beispielsweise kapazitive oder piezoelektrische Drucksensoren. Solche Drucksensoren werden auch für die Druckmessung bei Fahrzeugen mit Luftfedern und Niveauregelanlage eingesetzt. Die Befüllung der Luftfedern mit Druckmittel erfolgt dabei entweder in einem offenen oder in einem geschlossenen System.

In einem offenen System wird Umgebungsluft angesaugt, von einer Luftversorgung, beispielsweise einem Kompressor, verdichtet und in die Luftfedern des Fahrzeugs gepumpt, bis ein gewünschtes Höhenniveau erreicht ist. Zur Verringerung des Niveaus wird Luft aus den Federn in die Umgebung abgelassen. Zur wiederholten Belüftung der Luftfedern wird wiederum Luft von außen angesaugt.

Bei einer geschlossenen Niveauregelanlage erfolgt dagegen kein Austausch von Druckmittel mit der Umgebung. Solche geschlossenen Niveauregelanlagen sind beispielsweise aus der DE 199 59 556 C1 und EP 1 243 447 A2 bekannt geworden.

Sowohl beim geschlossenen als auch beim offenen System einer pneumatischen Niveauregelanlage ist es üblich, dass eine Druckmessung sofort nach der Initialisierung dieser erfolgt, beispielsweise nach dem Einschalten der Zündung oder dem Starten des Motors.

Die EP 1 274 596 B1 offenbart ein Verfahren zur Bestimmung der Radaufstandskraft eines Kraftfahrzeuges, bei dem die Ermittlung der statischen Radaufstandskraft aus dem wirksamen Durchmesser und dem Druck in der Luftfeder erfolgt und die dynamische Aufstandskraft aus dem Produkt von Auslenkung der Feder und Federsteifigkeit ermittelt wird.

Ein gemeinsamer Nachteil der bekannten Niveauregelanlagen ist, dass die Steuerventile und/oder Sperrventile der Niveauregelanlage sofort nach der Erkennung des Anliegens eines Signals der Zündung oder des Betriebs des Verbrennungsmotors zur Druckmessung angesteuert werden. Dies kann insbesondere bei kurzzeitigen Signalunterbrechungen oder dgl. zu sehr hohen Anzahl von Einschaltvorgängen mit hohen Stromaufnahmen der Ventile führen und die Lebensdauer der Ventile reduzieren.

Der Erfindung liegt demgegenüber die Aufgabe zugrunde, die Anzahl der Einschaltvorgänge der Ventile im Betrieb einer Niveauregelanlage auf das notwendige Maß zu begrenzen und damit die Lebensdauer der Ventile zu erhöhen.

Die Erfindung wird durch ein Verfahren mit den Merkmalen des Anspruchs 1 und durch eine Vorrichtung mit den Merkmalen des Anspruchs 6 gelöst. Bei dem Verfahren nach Anspruch 1 erfolgt erfindungsgemäß die Druckmessung der Niveauregelanlage zeitverzögert nach der Erkennung des Initialisierungssignals.

Der Vorteil der Erfindung besteht darin, dass aufgrund der Zeitverzögerung die Druckmessung der Niveauregelanlage mit Schalten der entsprechenden Ventile nur dann gestartet wird, wenn das Initialisierungssignal sicher und konstant vom Steuergerät erfasst wird. Dadurch können Signal-"Wackler" oder nur kurzzeitig anliegende Signale, z.B. durch Ein- und sofortiges wieder Aus-Schalten der Zündung, des Initialisierungssignals zuverlässig herausgefiltert werden und führen nicht zu einer Kurzzeit-Druckmessung. Die Anzahl der Ein-Schaltvorgänge der Ventile, insbesondere der Steuerventile, wird reduziert und die Lebensdauer der Ventile damit erhöht. Ggf. können für die gleiche Aufgabe mit dem erfindungsgemäßen Verfahren sogar kostengünstigere Ventile mit einer geringeren Lebensdauer eingesetzt werden. Ein weiterer Vorteil der Erfindung besteht darin, dass der Stromverbrauch der Niveauregelanlage insgesamt reduziert wird, da unnötige Ein-Schaltvorgänge der Ventile mit hohen Ein-Schaltströmen zuverlässig vermieden werden. Ein weiterer Vorteil der Erfindung besteht in der Reduzierung des Geräuschpegels der Niveauregelanlage, da unnötige Ein-Schaltvorgänge der Ventile mit Ein- und Aus-Schaltgeräuschen zuverlässig vermieden werden. Ein weiterer Vorteil der Erfindung besteht darin, das Auftreten von Fehlern der Niveauregelanlage zu verringern, welche z.B. durch sehr kurze Ein- bzw. Aus-Schaltvorgänge der Ventile hervorgerufen werden können und ggf. andere Steuergeräte des Kraftfahrzeuges beeinflussen können.

Erfindungsgemäß ist vorgesehen, dass das Initialisierungssignal den Zustand der Zündung oder der Batteriespannung des Kraftfahrzeuges wiedergibt. Der Vorteil ist darin zu sehen, dass das Initialisierungssignal die Hauptfehlerquellen für Spannungsschwankungen oder kurzzeitige Signalunterbrechungen wie z.B. die Batteriespannung bzw. das Signal der Zündung

Gemäß einer Weiterbildung nach Anspruch 2 ist vorgesehen, dass das Initialisierungssignal als eine steigende Flanke eines Spannungssignals ausgebildet ist. Der Vorteil dieser Weiterbildung ist darin zu sehen, dass Spannungsschwankungen des Initialisierungssignals, z.B. der Batteriespannung, des Zündungssignals oder dgl., sicher erkannt und entsprechend gefiltert werden, so dass keine unnötigen Schaltvorgänge der Ventile der Niveauregelanlage durchgeführt werden.

darstellt, womit diese kurzzeitigen Spannungs-Schwankungen bzw. -Unterbrechungen von dem Steuergerät der Niveauregelanlage sicher erkannt werden können, so dass keine unnötigen Schaltvorgänge der Ventile der Niveauregelanlage durchgeführt werden.

Gemäß einer Weiterbildung nach Anspruch 3 ist vorgesehen, dass das Initialisierungssignal über den CAN-Bus übertragen wird. Der Vorteil dieser Weiterbildung ist darin zu sehen, dass das Initialisierungssignal auf einer im Kraftfahrzeug vorhandenen Signalleitung übertragen werden kann und keine separate Signalleitung notwendig ist.

Gemäß einer Weiterbildung nach Anspruch 4 ist vorgesehen, dass die Zeitverzögerung des Beginns der Druckmessung durch ein Zeitglied oder ein Filter erfolgt. Mit dieser vorteilhaften Weiterbildung der Erfindung ist es auf einfache und kostengünstige Weise möglich, z.B. mittels eines Zeitrelais oder eines digitalen Filters, die Zeitverzögerung der Inbetriebnahme der Druckmessung der Niveauregelanlage darzustellen und durchzuführen.

Gemäß einer Weiterbildung nach Anspruch 5 ist vorgesehen, dass die Zeitverzögerung des Beginns der Druckmessung im Bereich von 1 bis 5 Sekunden liegt. Der Vorteil dieser Weiterbildung der Erfindung ist darin zu sehen, dass einerseits in dem gewählten Zeitbereich unnötige und die Ventile belastende Schaltvorgänge vermieden werden, andererseits die Druckmessung der Niveauregelanlage nicht zu lange hinausgzögert wird, um sich ggf. daran anschließende Höhenregelvorgänge nicht unnötig zu behindern und zeitlich zu verzögern.

Gemäß einer erfindungsgemäßen Vorrichtung nach Anspruch 6 ist vorgesehen, dass die Druckmessung der Niveauregelanlage zeitverzögert nach der Erkennung des Initialisierungssignals erfolgt.

Der Vorteil der erfindungsgemäßen Vorrichtung besteht darin, dass aufgrund der Zeitverzögerung die Druckmessung der Niveauregelanlage mit dem Schalten der entsprechenden Ventile nur dann gestartet wird, wenn das Initialisierungssignal sicher und konstant vom Steuergerät erfasst wird. Dadurch können Signal-"Wackler" oder nur kurzzeitig anliegende Signale, z.B. durch Ein- und sofortiges wieder Aus-Schalten der Zündung, des Initialisierungssignals zuverlässig herausgefiltert werden und führen nicht zu einer Kurzzeit-Druckmessung, welche kein korrektes Drucksignal wiedergibt.

Die Anzahl der Ein-Schaltvorgänge der Ventile, insbesondere der Steuerventile, wird reduziert und die Lebensdauer der Ventile damit erhöht. Ggf. können für die gleiche Aufgabe mit dem erfindungsgemäßen Verfahren sogar kostengünstigere Ventile mit einer geringeren Lebensdauer eingesetzt werden. Ein weiterer Vorteil der Erfindung besteht darin, dass der Stromverbrauch der Niveauregelanlage insgesamt reduziert wird, da unnötige Ein- bzw. Aus-Schaltvorgänge der Ventile mit hohen Ein-Schaltströmen zuverlässig vermieden werden. Ein weiterer Vorteil der Erfindung besteht in der Reduzierung des Geräuschpegels der Niveauregelanlage, da unnötige Ein-Schaltvorgänge der Ventile mit Ein- und Aus-Schaltgeräuschen zuverlässig vermieden werden. Ein weiterer Vorteil der Erfindung besteht darin, das Auftreten von Fehlern der Niveauregelanlage zu verringern, welche z.B. durch sehr kurze Ein- bzw. Aus-Schaltvorgänge der Ventile hervorgerufen werden können und ggf. andere Steuergeräte des Kraftfahrzeuges beeinflussen können.

Ausführungsbeispiele und weitere Vorteile der Erfindung werden im Zusammenhang mit den nachstehenden Figuren erläutert, darin zeigen:
Fig. 1 eine pneumatische Niveauregelanlage,
Fig. 2 ein Diagramm der Schaltspannungen und
Fig. 3 einen zeitlichen Verlauf der Schaltspannung in Diagrammform,
Fig. 4 einen Verlauf der Einschaltspannung in Diagrammform.

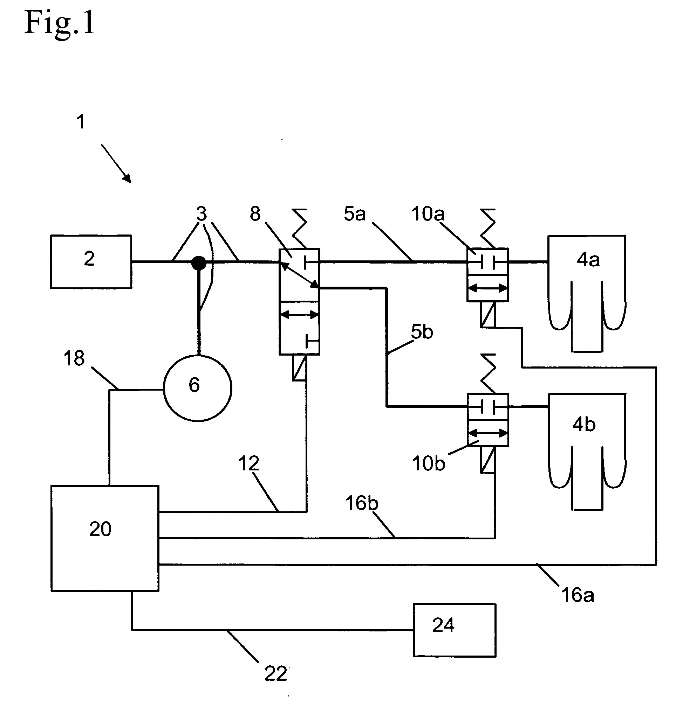

Die Fig. 1 zeigt in vereinfachter und schematischer Darstellung eine pneumatische Niveauregelanlage 1 mit einer Luftversorgung 2, welche über eine erste Druckleitung 3 mit einem Steuerventil 8 verbunden ist. Durch die Schaltstellung des Steuerventils 8 kann die erste Druckleitung 3 entweder mit einer zweiten Druckleitung 5a, einem ersten Sperrventil 10a und einer ersten Luftfeder 4a oder mit einer dritten Druckleitung 5b, einem zweiten Sperrventil 10b und einer zweiten Luftfeder 4b verbunden werden. Somit kann bei geeigneter Schaltstellung der Ventile 8, 10a, 10b Luft von der Luftversorgung 2 in die Luftfedern 4a, 4b gefördert oder von den Luftfedern 4a, 4b zur Luftversorgung 2 zurück und in die Atmosphäre oder in einen nicht gezeigten Druckspeicher gefördert werden. Die Luftversorgung 2 kann dabei aus einem Kompressor mit Trockner und Ein- und/oder Auslassventilen, einer Verbindung in die Atmosphäre und ggf. einem Druckspeicher bestehen. Die Ventile 8, 10a, 10b werden von einem Steuergerät 20 über die Signalleitungen 12, 16a und 16b angesteuert, so dass diese die entsprechend geforderte Schaltstellung einnehmen.

Ferner ist an die erste Druckleitung 3 ein Drucksensor 6 angeschlossen. Das Messsignal des Drucksensors 6 wird über die Drucksensorsignalleitung 18 an das Steuergerät 20 zur weiteren Verarbeitung übertragen. Das Steuergerät 20 der Niveauregelanlage 1 ist ferner über eine Signalleitung des Initialisierungssignals 22 mit einer Initialisierungskomponente 24 verbunden. Die Initialisierungskomponente 24 kann z.B. das Zündschloss des Fahrzeuges, die Fahrzeug-Batterie, der CAN-Bus im Fahrzeug oder dgl. sein.

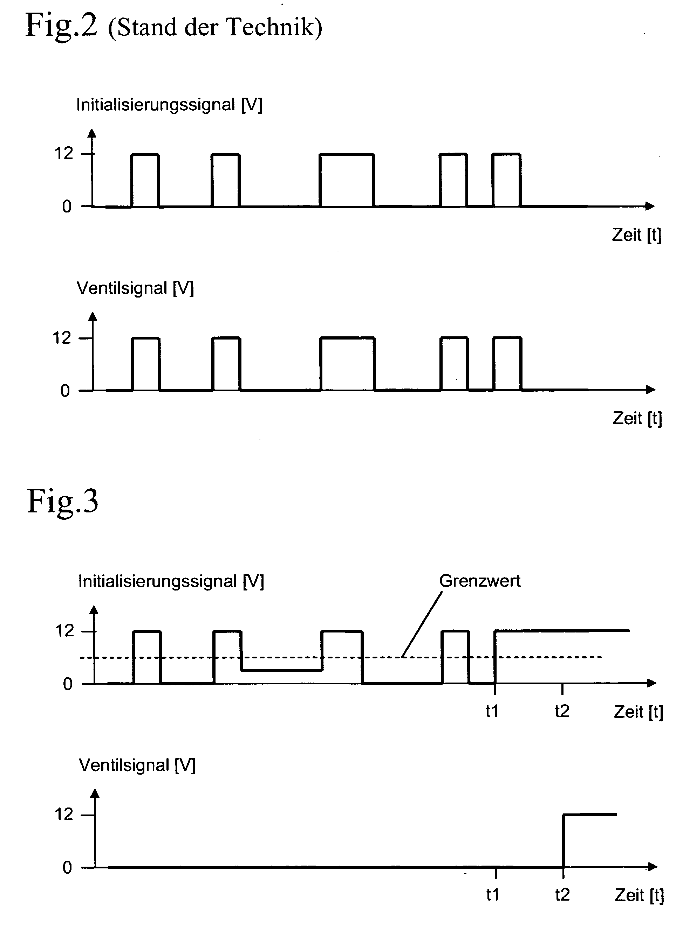

Eine Druckmessung der Niveauregelanlage ist insbesondere bei Fahrtantritt erforderlich, nachdem das Fahrzeug beispielsweise längere Zeit nicht betrieben worden ist, wobei in der Zwischenzeit größere Druckdifferenzen in der Niveauregelanlage 1 aufgetreten sein können. Die Schaltstellung des Zündschlosses, das Zündungssignal (Klemme 15), kann in diesem Fall in sehr einfacher Weise als Initialisierungskomponente 24 zur Abgabe des Initialisierungssignals 22 der Niveauregelanlage 1 genutzt werden. Erst nachdem das Initialisierungssignal 22 für eine bestimmte Zeitspanne (t1 bis t2, wie in Fig.3 näher erläutert) an dem Steuergerät 20 anliegt, wird die Druckmessung der Niveauregelanlage 1, z.B. in der Luftfeder 4b durch Schalten des Sperrventils 10b oder in der Luftfeder 4a durch Schalten des Steuerventils 8 und des Sperrventils 10a, durchgeführt. Der Druck in der Druckleitung 3 gleicht sich an den Druck in der jeweiligen Luftfeder 4a bzw. 4b an und kann somit vom Drucksensor 6 gemessen werden. Selbstverständlich ist auf vergleichbare Weise auch die Messung des Drucks in einem nicht gezeigten Druckspeicher oder weiteren Luftfedern möglich.

Der gemessene Druck wird in dem Steuergerät 20 z.B. für die Ermittlung der aktuellen Fahrzeuglast eingesetzt. Es ist aber auch möglich, anhand des gemessenen Drucks das aktuell in der gesamten Niveauregelanlage 1 befindliche Luftvolumen zu ermitteln, was insbesondere bei einer geschlossenen Niveauregelanlage 1 die Voraussetzung für die Durchführung von Niveauregelvorgängen und die Festlegung bzw. Anpassung der Niveauregelgeschwindigkeiten ist.

Ein entsprechendes Zeitglied, welches die gegenüber dem Vorliegen des Initialisierungssignals zeitverzögerte Einschaltung eines entsprechenden Ventils 8, 10a, 10b der Niveauregelanlage 1 zur Druckmessung steuert oder regelt, ist in dem Steuergerät 20 integriert. Das Zeitglied kann z.B. als ein Zeitrelais, ein digitales Filter oder dgl. ausgebildet sein. Es ist aber auch möglich, das Zeitglied außerhalb des Steuergerätes 20 oder der Niveauregelanlage 1 anzuordnen, so dass die Initialisierungssignalleitung 22 nicht direkt mit dem Steuergerät 20 verbunden ist, sondern mit dem Zeitglied, welches ein ausgewertetes und zeitverzögertes zweites Initialisierungssignal zum Steuergerät leitet. Die Druckmessung der Niveauregelanlage 1 wird durch das zweite ausgewertete und zeitverzögerte des außerhalb des Steuergerätes 20 angeordneten Zeitgliedes sofort gestartet, wobei die Zeitverzögerung der Druckmessung und damit des entsprechenden Ventilsignals gegenüber dem ersten Initialisierungssignal, z.B. des Signals der Zündung Ein/Aus (Klemme 15 Ein/Aus), erhalten bleibt.

Die Fig.2 zeigt in Diagrammform den zeitlichen Verlauf des Initialisierungssignals und des Ventilsignals, z.B. des Sperrventils 10b der Fig.1, nach dem Stand der Technik. Es ist zu erkennen, dass das Ventilsignal praktisch identisch mit dem Initialisierungssignal ist. D.h. immer wenn das Initialisierungssignal von low (0V) auf high (12V) wechselt und ein steigende Flanke des Signals vorliegt, dann wechselt auch das Ventilsignal den Zustand von low (0V) nach high (12V). Ebenso wechselt das Ventilsignal seinen Zustand von high (12V) nach low (0V), wenn dies von dem Initialisierungssignal entsprechend vorgegeben wird. Der Signalwechsel des Ventilsignals ist völlig unabhängig von der Länge des vorliegenden Initialisierungssignals, wodurch auch sehr kurzzeitige Zustandswechsel des Initialisierungssignals von dem Ventilsignal nachgeführt werden.

Die Fig.3 zeigt in Diagrammform den erfindungsgemäßen zeitlichen Verlauf des Initialisierungssignals und des Ventilsignals, z.B. des Sperrventils 10b der Fig.1. Das Initialisierungssignal weist zu Beginn des zeitlichen Verlaufs einige sehr kurzzeitige Zustandswechsel von low (0V) oder unterhalb eines Grenzwertes, z.B. 5 V, nach high (12V) und wieder zurück auf, welche keine Auswirkungen auf das Ventilsignal und einen entsprechenden Zustandswechsel dieses haben, so dass das entsprechende Ventil nicht kurzzeitig ein- und wieder ausgeschaltet wird. Entsprechend kurzzeitige Initialisierungssignale können durch Einschalten und sofortiges wieder Ausschalten der Zündung oder durch Wackelkontakte in der Signalleitung oder durch plötzliche Spannungseinbrüche durch Inbetriebnahme eines größeren elektrischen Verbrauchers des Fahrzeuges hervorgerufen werden. Ab dem ersten Zeitpunkt t1 liegt für längere oder unbegrenzte Zeit ein stabiles positives Initialisierungssignal im Zustand high (12V) oder insbesondere oberhalb eines vorgebbaren Grenzwertes vor. Soweit ein vorgegebene Zeitspanne beim zweiten Zeitpunkt t2 abgelaufen ist, welcher der zeitlichen Differenz des zweiten Zeitpunkts t2 zum ersten Zeitpunkt t1 entspricht, wechselt das Ventilsignal, zeitverzögert gegenüber dem Zustandswechsel des Initialisierungssignals, seinen Zustand von low (0V) oder unterhalb eines Grenzwertes nach high (12V), womit die Druckmessung der Niveauregelanlage 1 durchgeführt werden kann. Das Ventilsignal wechselt seinen Zustand von high (12V) nach low (0V) oder unterhalb eines Grenzwertes, wenn die Druckmessung der entsprechenden Luftfeder, des Druckspeicher oder dgl. beendet ist.

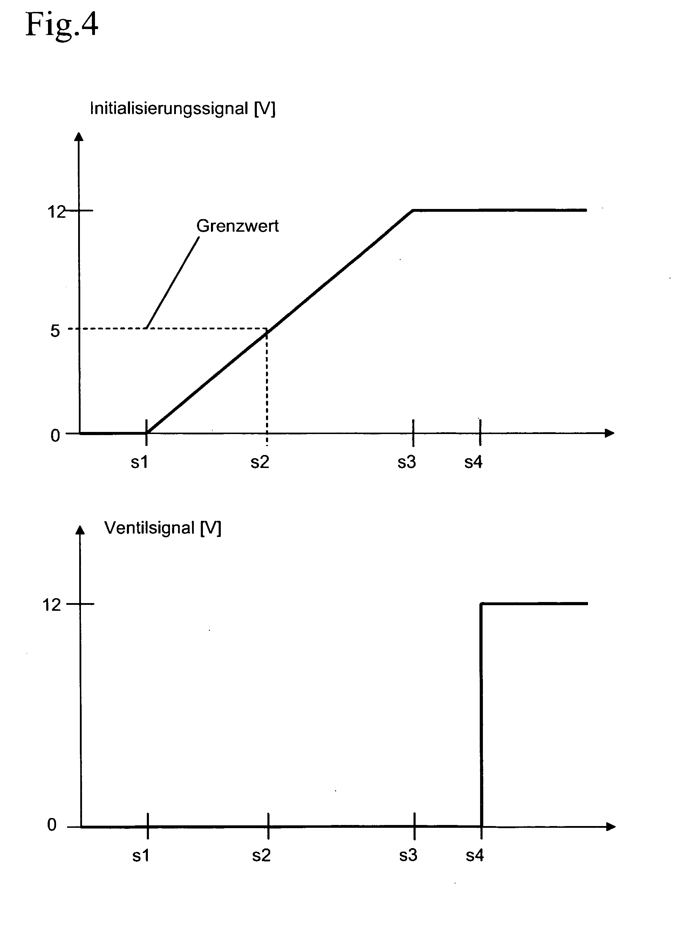

Die Figur 4 zeigt in Diagrammform den erfindungsgemäßen zeitlichen Verlauf des Initialisierungssignals und des Ventilsignals, z.B. des Sperrventils 10b der Fig.1. Im Gegensatz zu den Beispielen in den Figuren 2 und 3 sind in der Fig.4 der Übersichtlichkeit halber nur die Signalverläufe kurz vor und während der Wieder-Inbetriebnahme nach einem Abbruch eines Niveauregelvorganges aufgrund eines plötzlichen Abfalls des Initialisierungssignals gezeigt. Das Initialisierungssignal weist zu Beginn des zeitlichen Verlaufs den Zustand low (0V) auf, wobei auch ein Signal unterhalb des Grenzwertes und oberhalb von 0 V möglich wäre. Das Initialisierungssignal weist ab dem Zeitpunkt s1 einen kontinuierlich, insbesondere linear, ansteigenden Signalverlauf über den Grenzwert (5V) zum Zeitpunkt s2 bis zum Zustand high (12V) beim Zeitpunkt s3 auf. Ab dem Zeitpunkt s3 wird der Zustand high (12V) kontinuierlich beibehalten.

Das Ventilsignal in der Fig.4 weist zu Beginn und bis zum Zeitpunkt s4 den Zustand low (0V) auf, um zum Zeitpunkt s4 den Zustand sprunghaft von low (0V) auf high (12V) zu wechseln. Der Zustandswechsel des Ventilsignals könnte aber auch nicht sprunghaft, sondern kontinuierlich, insbesondere linear kontinuierlich, erfolgen. Der Zustandswechsel des Ventilsignals erfolgt aber zum Zeitpunkt s4 nur, wenn, wie in Fig.4 gezeigt, zwei Einschaltbedingungen erfiillt sind. Erstens ist ein Grenzwert des Initialisierungssignals, hier z.B. 5 V, zu einem Zeitpunkt s2 zu überschreiten und zweitens ist von dem Zeitpunkt s2 oder s3 bis zum Zeitpunkt s4 eine vorgegebene Zeitspanne einzuhalten, in welcher das Initialisierungssignal über dem Grenzwert liegen muss und ggf. auch zum Zeitpunkt s4 den Zustand high (12V) aufweisen muss. Beide Einschaltbedingungen sind in dem in der Fig.4 gezeigten Beispiel erfüllt, so dass der Zustandswechsel des Ventilsignals zum Zeitpunkt s4 erfolgt und die Niveauregelanlage wieder in Betrieb genommen wird und ggf. den abgebrochenen Niveauregelvorgang zu Ende führen kann.

Würde das Initialisierungssignal nach dem Zeitpunkt s1 und vor dem Zeitpunkt s4 den vorgegebenen Grenzwert nicht erreichen/überschreiten oder wieder unterschreiten und/oder nach dem Zeitpunkt s3 und vor dem Zeitpunkt s4 den Zustand high (12) wieder verlassen und unterschreiten, dann würde zumindest eine der erforderlichen zwei Einschaltbedingungen zur Inbetriebnahme der Niveauregelanlage nicht erfüllt und das Ventilsignal würde zum Zeitpunkt s4 keinen Zustandswechsel ausführen und den Zustand low (0V) beibehalten. Damit würde eine erneute Überprüfung der beiden Einschaltbedingungen des Initialisierungssignals hinsichtlich des Grenzwertes und der vorgegebenen Zeitspanne erfolgen, bis beide Einschaltbedingungen erfüllt sind (wie in Fig.4 gezeigt). Der Grenzwert ist frei vorgebbar und kann z.B. auch einen Wert von 8V annehmen.

### Bezugszeichenliste

### (Teil der Beschreibung)

- 1 -: Pneumatische Niveauregelanlage
- 2 -: Luftversorgung
- 3 -: erste Druckleitung
- 4a -: erste Luftfeder
- 4b -: zweite Luftfeder
- 5a -: zweite Druckleitung
- 5b -: dritte Druckleitung
- 6 -: Drucksensor
- 8 -: Steuerventil
- 10a -: erstes Sperrventil
- 10b -: zweites Sperrventil
- 12 -: Druckleitung
- 14 -: Signalleitung Steuerventil
- 16a -: erste Signalleitung Sperrventil
- 16b -: zweite Signalleitung Sperrventil
- 18 -: Drucksensorsignalleitung
- 20 -: Steuergerät
- 22 -: Initialisierungssignalleitung
- 24 -: Initialisierungskomponente
- t1 -: erster Zeitpunkt
- t2 -: zweiter Zeitpunkt

## Patentansprüche

1. Verfahren zur Steuerung und/oder Regelung einer pneumatischen Niveauregelanlage (1) eines Kraftfahrzeuges, enthaltend eine Luftversorgung (2), mindestens einen Drucksensor (6), mindestens ein Steuerventil (8), mindestens ein Sperrventil (10a, 10b) und mindestens eine Luftfeder (4a, 4b), wobei die Luftfeder (4a, 4b) über eine Druckleitung (3, 5a, 5b) mit der Luftversorgung (2) in Verbindung steht und der Druck in der Druckleitung (3, 5a, 5b) von dem Drucksensor (6) ermittelt werden kann, wobei die Druckmessung der Niveauregelanlage (1) durch Schalten des Sperrventils (10a, 10b) und des Steuerventils (8) erfolgt, enthaltend weiterhin ein Steuergerät (20) zur Ansteuerung des Steuerventils (8) und des Sperrventils (10a, 10b) und zur Verarbeitung eines Initialisierungssignals (22) und des Signals des Drucksensors (18), **dadurch gekennzeichnet, dass**
die Druckmessung der Niveauregelanlage (1) mit Schalten der entsprechenden Ventile (8,10a,10b) zeitverzögert nach Anliegen eines Initialisierungssignals (22) an dem Steuregerät (20) erfolgt, wobei das Initialisierungssignal (22) den Zustand der Zündung oder der Batteriespannung des Kraftfahrzeuges wiedergibt.

2. Verfahren zur Steuerung und/oder Regelung einer pneumatischen Niveauregelanlage (1) eines Kraftfahrzeuges nach Anspruch 1, **dadurch gekennzeichnet, dass**
das Initialisierungssignal (22) als eine steigende Flanke eines Spannungssignals ausgebildet ist.

3. Verfahren zur Steuerung und/oder Regelung einer pneumatischen Niveauregelanlage (1) eines Kraftfahrzeuges nach Anspruch 1 oder 2, **dadurch gekennzeichnet, dass**
das Initialisierungssignal (22) über den CAN-Bus übertragen wird.

4. Verfahren zur Steuerung und/oder Regelung einer pneumatischen Niveauregelanlage (1) eines Kraftfahrzeuges nach einem der vorherigen Ansprüche, **dadurch gekennzeichnet, dass**
die Zeitverzögerung des Beginns der Druckmessung durch ein Zeitglied (20) oder ein Filter (20) erfolgt.

5. Verfahren zur Steuerung und/oder Regelung einer pneumatischen Niveauregelanlage (1) eines Kraftfahrzeuges nach einem der vorherigen Ansprüche, **dadurch gekennzeichnet, dass**
die Zeitverzögerung des Beginns der Druckmessung im Bereich von 1 bis 5 Sekunden liegt.

6. Pneumatischen Niveauregelanlage (1) eines Kraftfahrzeuges zur Durchführung des Verfahrens nach Anspruch 1, enthaltend eine Luftversorgung (2), mindestens einen Drucksensor (6), mindestens ein Steuerventil (8), mindestens ein Sperrventil (10a, 10b) und mindestens ein Luftfeder (4a, 4b), wobei die Luftfeder (4a, 4b) über eine Druckleitung (3, 5a, 5b) mit der Luftversorgung (2) in Verbindung steht und der Druck in der Druckleitung (3, 5a, 5b) von dem Drucksensor (6) ermittelt werden kann, wobei die Druckmessung der Niveauregelanlage (1) durch Schalten des Sperrventils (10a, 10b) und des Steuerventil (8) erfolgt, enthaltend weiterhin ein Steuergerät (20) zur Ansteuerung des Steuerventils (8) und des Sperrventils (10a, 10b) und zur Verarbeitung eines Initialisierungssignals (22) und des Signals des Drucksensors (18), **dadurch gekennzeichnet, dass**
das Steuregerät (20) die Druckmessung der Niveauregelanlage (1) mit Schalten der entsprechenden Ventile (8, 10a, 10b) zeitverzögert nach Anliegen eines Initialisierungssignals (22) einleitet, wobei das Initialisierungssignal (22) den Zustand der Zündung oder der Batteriespannung des Kraftfahrzeuges wiedergibt..

## Claims

1. Method for performing open-loop and/or closed-loop control of a pneumatic ride level control system (1) of a motor vehicle, containing an air supply (2), at least one pressure sensor (6), at least one control valve (8), at least one check valve (10a, 10b) and at least one air spring (4a, 4b), wherein the air spring (4a, 4b) is connected to the air supply (2) via a pressure line (3, 5a, 5b), and the pressure in the pressure line (3, 5a, 5b) can be determined by the pressure sensor (6), wherein the pressure measurement of the ride level control system (1) is carried out by switching the check valve (10a, 10b) and the control valve (8), also containing a control unit (20) for actuating the control valve (8) and the check valve (10a, 10b) and for processing an initialization signal (22) and the signal of the pressure sensor (18), **characterized in that**
the pressure measurement of the ride level control system (1) takes place with switching of the corresponding valves (8, 10a, 10b) in a delayed fashion after an initialization signal (22) has been applied to the control unit (20), wherein the initialization signal (22) represents the state of the ignition or of the battery voltage of the motor vehicle.

2. Method for performing open-loop and/or closed-loop control of a pneumatic ride level control system (1) of a motor vehicle according to Claim 1, **characterized in that** the initialization signal (22) is embodied as a rising edge of a voltage signal.

3. Method for performing open-loop and/or closed-loop control of a pneumatic ride level control system (1) of a motor vehicle according to Claim 1 or 2, **characterized in that** the initialization signal (22) is transmitted over the CAN bus.

4. Method for performing open-loop and/or closed-loop control of a pneumatic ride level control system (1) of a motor vehicle according to one of the preceding claims, **characterized in that**
the delaying of the start of the pressure measurement is carried out by means of a timer element (20) or a filter (20).

5. Method for performing open-loop and/or closed-loop control of a pneumatic ride level control system (1) of a motor vehicle according to one of the preceding claims, **characterized in that**
the delaying of the start of the pressure measurement is in the range from 1 to 5 seconds.

6. Pneumatic ride level control system (1) of a motor vehicle for carrying out the method according to Claim 1, containing an air supply (2), at least one pressure sensor (6), at least one control valve (8), at least one check valve (10a, 10b) and at least one air spring (4a, 4b), wherein the air spring (4a, 4b) is connected to the air supply (2) via a pressure line (3, 5a, 5b), and the pressure in the pressure line (3, 5a, 5b) can be determined by the pressure sensor (6), wherein the pressure measurement of the ride level control system (1) is carried out by switching the check valve (10a, 10b) and the control valve (8), also containing a control unit (20) for actuating the control valve (8) and the check valve (10a, 10b) and for processing an initialization signal (22) and the signal of the pressure sensor (18), **characterized in that**
the control unit (20) initiates the pressure measurement of the ride level control system (1) in a delayed fashion after an initialization signal (22) has been applied, wherein the initialization signal (22) represents the state of the ignition or of the battery voltage of the motor vehicle.

## Revendications

1. Procédé de commande et/ou de régulation d'un équipement de régulation de niveau pneumatique (1) d'un véhicule automobile, comprenant une alimentation pneumatique (2), au moins un capteur de pression (6), au moins une vanne de commande (8), au moins une vanne d'arrêt (10a, 10b) et au moins un amortisseur pneumatique (4a, 4b), l'amortisseur pneumatique (4a, 4b) étant relié avec l'alimentation pneumatique (2) par le biais d'une conduite sous pression (3, 5a, 5b) et la pression dans la conduite sous pression (3, 5a, 5b) pouvant être déterminée par le capteur de pression (6), la mesure de la pression de l'équipement de régulation de niveau (1) s'effectuant en commutant la vanne d'arrêt (10a, 10b) et la vanne de commande (8), comprenant en outre un contrôleur (20) pour commander la vanne de commande (8) et la vanne d'arrêt (10a, 10b) et pour traiter un signal d'initialisation (22) et le signal du capteur de pression (18),
**caractérisé en ce que**
la mesure de la pression de l'équipement de régulation de niveau (1) avec commutation des vannes correspondantes (8, 10a, 10b) s'effectue avec un retard dans le temps après l'application d'un signal d'initialisation (22) au contrôleur (20), le signal d'initialisation (22) restituant l'état de l'allumage ou de la tension de batterie du véhicule automobile.

2. Procédé de commande et/ou de régulation d'un équipement de régulation de niveau pneumatique (1) d'un véhicule automobile selon la revendication 1, **caractérisé en ce que** le signal d'initialisation (22) est configuré comme un front montant d'un signal de tension.

3. Procédé de commande et/ou de régulation d'un équipement de régulation de niveau pneumatique (1) d'un véhicule automobile selon la revendication 1 ou 2, **caractérisé en ce que** le signal d'initialisation (22) est transmis par le biais du bus CAN.

4. Procédé de commande et/ou de régulation d'un équipement de régulation de niveau pneumatique (1) d'un véhicule automobile selon l'une des revendications précédentes, **caractérisé en ce que** le retard dans le temps du début de la mesure de pression est généré par un temporisateur (20) ou un filtre (20).

5. Procédé de commande et/ou de régulation d'un équipement de régulation de niveau pneumatique (1) d'un véhicule automobile selon l'une des revendications précédentes, **caractérisé en ce que** le retard dans le temps du début de la mesure de pression se trouve dans la plage de 1 à 5 secondes.

6. Équipement de régulation de niveau pneumatique (1) d'un véhicule automobile destiné à mettre en oeuvre le procédé selon la revendication 1, comprenant une alimentation pneumatique (2), au moins un capteur de pression (6), au moins une vanne de commande (8), au moins une vanne d'arrêt (10a, 10b) et au moins un amortisseur pneumatique (4a, 4b), l'amortisseur pneumatique (4a, 4b) étant relié avec l'alimentation pneumatique (2) par le biais d'une conduite sous pression (3, 5a, 5b) et la pression dans la conduite sous pression (3, 5a, 5b) pouvant être déterminée par le capteur de pression (6), la mesure de la pression de l'équipement de régulation de niveau (1) s'effectuant en commutant la vanne d'arrêt (10a, 10b) et la vanne de commande (8), comprenant en outre un contrôleur (20) pour commander la vanne de commande (8) et la vanne d'arrêt (10a, 10b) et pour traiter un signal d'initialisation (22) et le signal du capteur de pression (18), **caractérisé en ce que**
le contrôleur (20) retarde dans le temps la mesure de la pression de l'équipement de régulation de niveau (1) avec commutation des vannes correspondantes (8, 10a, 10b) après l'application d'un signal d'initialisation (22), le signal d'initialisation (22) restituant l'état de l'allumage ou de la tension de batterie du véhicule automobile.
